# EUROPEAN PATENT APPLICATION

(11) **EP 4 510 687 A1**
(43) Date of publication of application: **19.02.2025**
(21) Application number: 23787787.3
(22) Date of filing: 13.04.2023
(51) Int. Cl.: H04W 24/10

(54) **METHOD FOR DETERMINING WHETHER TO REPORT MEASUREMENT RELAX STATE, AND USER EQUIPMENT**

(30) Priority: 14.04.2022 CN 202210400949
(71) Applicant: Sharp Kabushiki Kaisha, Sakai City, Osaka 590-8522 (JP)
(72) Inventor: LIU, Renmao, Pudong, Shanghai 201206 (CN); LIU, Lei, Pudong, Shanghai 201206 (CN)
(74) Representative: Müller Hoffmann & Partner
(86) International application number: PCT/CN2023/088035
(87) International publication number: WO 2023/198145

(57) **Abstract**

Provided in the present invention is a method performed by user equipment for determining whether to report a measurement relaxation state, the method including: when the user equipment is configured with a cell configuration for a target cell on which a radio link measurement is to be performed, determining whether the target cell satisfies a measurement relaxation evaluation execution condition; when the measurement relaxation evaluation execution condition is satisfied, performing, for the target cell, measurement relaxation evaluation for determining whether the target cell satisfies a measurement relaxation criterion related to the radio link measurement; and determining, on the basis of a measurement relaxation evaluation result, whether to report a measurement relaxation state to a base station.

## Description

### TECHNICAL FIELD

The present invention relates to the technical field of wireless communications. More specifically, the present invention relates to a method performed by user equipment for determining whether to report a measurement relaxation state, and corresponding user equipment.

### BACKGROUND

At the 3rd Generation Partnership Project (3GPP) RAN#86 plenary meeting held in December 2019, a work item for power saving enhancements in Release 17 (see Non-Patent Document: RP-193239 New WID: UE Power Saving Enhancements) was proposed and approved. Regarding the latest release of the work item, see Non-Patent Document: RP-200938 Revised WID_UE Power Saving Enhancements for NR_Change. The work item mainly studies how a terminal saves power in RRC Idle state and RRC Inactive state. One of the goals of the work item is to study and evaluate relaxation of radio link monitoring (RLM) performed by a terminal and relaxation of beam failure detection (BFD) performed by a terminal. Both radio link monitoring and beam failure detection are performed in RRC Connected state. For a low mobility terminal, the radio link quality is generally relatively stable. In this case, after certain criterion-based determination, the terminal may relax radio link monitoring, for example, reducing the number of times of sampling, lengthening a monitoring period, etc. Similarly, after certain criterion-based determination, beam failure detection may also be relaxed, thereby achieving the purpose of reducing power consumption. Criteria for determination include a low mobility criterion and a good cell criterion. A UE may report, to a network, information on whether RLM/BFD measurement relaxation is adopted, so that the network performs relevant parameter configuration better.

The present invention discusses when the UE reports, to the network, information on RLM/BFD measurement relaxation in RRC Connected state.

### SUMMARY

The objective of the present invention is to provide a method for determining whether to report a measurement relaxation state, and an electronic device, which can avoid unnecessary measurement relaxation state reporting.

According to an aspect of the present invention, provided is a method performed by user equipment for determining whether to report a measurement relaxation state, the method comprising: when the user equipment is configured with a cell configuration for a target cell on which a radio link measurement is to be performed, determining whether the target cell satisfies a measurement relaxation evaluation execution condition; when the measurement relaxation evaluation execution condition is satisfied, performing, for the target cell, measurement relaxation evaluation for determining whether the target cell satisfies a measurement relaxation criterion related to the radio link measurement; and determining, on the basis of a measurement relaxation evaluation result, whether to report a measurement relaxation state to a base station.

According to another aspect of the present invention, further provided is user equipment, comprising: a processor; and a memory, having instructions stored therein, wherein the instructions, when run by the processor, perform the method provided in the present invention.

According to the solution of the present invention, when to report a measurement relaxation state can be accurately determined, and unnecessary measurement relaxation state reporting can be avoided, thereby reducing power consumption.

### BRIEF DESCRIPTION OF THE DRAWINGS

FIG. 1 is a flowchart of a method for determining whether to report a measurement relaxation state provided by an embodiment of the present invention.
FIG. 2 is a flowchart of an exemplary procedure of determining whether to report a measurement relaxation state in a method for determining whether to report a measurement relaxation state provided by an embodiment of the present invention.
FIG. 3 is a flowchart of another exemplary procedure of determining whether to report a measurement relaxation state in a method for determining whether to report a measurement relaxation state provided by an embodiment of the present invention.
FIG. 4 is a simplified structural block diagram of user equipment (UE) according to the present invention.

### DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
RRC: Radio Resource Control
MAC: Medium Access Control
RRC_CONNECTED: RRC Connected state
RRC_INACTIVE: RRC Inactive state
RRC_IDLE: RRC Idle state
RAN: Radio Access Network
RSRP: Reference Signal Receiving Power
AS: Access Stratum
PDCCH: Physical Downlink Control Channel
BWP: Bandwidth Part
DCI: Downlink Control Information
DL: Downlink
IE: Information Element
CE: Control Element
MIB: Master Information Block
SIB: System Information Block
RLM: Radio Link Monitoring
BFD: Beam Failure Detection
RLF: Radio Link Failure
BFR: Beam Failure Recovery
BLER: Block Error Rate
RRM: Radio Resource Management
Serving Cell: Serving Cell, which may be a PCell, a PSCell, or an SCell
SpCell: Special Cell, which may be a PCell or a PSCell
PCell: Primary Cell
PSCell: Primary SCG Cell
SCell: Secondary Cell
SCG: Secondary Cell Group
C-RNTI: Cell RNTI
RNTI: Radio Network Temporary Identifier
HARQ: Hybrid Automatic Repeat Request
DAPS: Dual Active Protocol Stack
SINR: Signal to Noise and Interference Ratio
DRB: (user) Data Radio Bearer
CA: Carrier Aggregation
DC: Dual Connectivity
CSI-RS: CSI reference signal, channel state information reference signal

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device supporting an NR power saving enhancement function as described in the background, may refer to an NR device supporting radio link monitoring relaxation, may refer to an NR device having a radio link monitoring relaxation capability, may refer to an NR device supporting link failure detection relaxation, may refer to an NR device having a link failure detection relaxation capability, and may also refer to an NR device or an LTE device of another type.

In the present invention, "relaxed radio link monitoring (RLM)", "radio link monitoring (RLM) relaxation", and "relaxation of radio link monitoring (RLM) measurement" may be used interchangeably. "State" and "status" may be used interchangeably.

In the present invention, cancel, release, delete, flush, clear, etc., are interchangeable. Execute, use, employ, and apply are interchangeable. "Configure" and "reconfigure" are interchangeable. "Enable", "use", "apply", "perform", "start", etc., may be used interchangeably. In the present invention, "enable", "stop", "not initiate", "not perform", etc., may be used interchangeably. "RLM/BFD" refers to RLM and/or BFD, and may also refer to only RLM or only BFD. "Reporting a relaxation state of RLM measurement for the cell group" and "reporting a relaxation state of RLM measurement of the cell group" may be used interchangeably.

In the present invention, "not stopped" and "being executed" may be used interchangeably.

Hereinafter, a description will be given of related art of the present invention.

RLM refers to the UE monitoring downlink radio link quality according to a reference signal configured by the network, with the goal of measuring the downlink radio link quality of an SpCell (i.e., a PCell or a PSCell). A configured reference signal for the RLM procedure may be an SSB and/or a CSI-RS. The UE performs the RLM procedure on an activated downlink BWP.

BFD refers to the UE performing beam detection according to a reference signal configured by the network, with the aim of detecting a beam failure situation. The BFD procedure may be applied to each serving cell, including an SpCell and an SCell. If the SCell is deactivated, the UE does not need to perform any BFD measurement on the SCell. A configured reference signal for the BFD procedure may be an SSB and/or a CSI-RS. The UE performs the BFD procedure on an activated downlink BWP.

For a low mobility terminal, the radio link quality is generally relatively stable. In this case, after certain criterion-based determination, the terminal may relax RLM/BFD, for example, reducing the number of times of sampling, lengthening a monitoring evaluation period, lengthening a reporting indication period, etc. In RRC Connected state, RLM/BFD relaxation may be that the base station configures relaxation criterion configuration parameters via a system message or RRC dedicated signaling, and relaxation criteria may include a low mobility criterion and a good serving cell quality criterion. The configuration parameters may include enabling and disabling of the criteria, thresholds of the criteria, determination time parameters, etc. The UE determines the mobility and serving cell quality thereof by comparing and evaluating a measurement result of the SpCell or the serving cell with the thresholds in the RLM/BFD relaxation criteria, and if the relaxation criteria are satisfied, the UE may adopt relaxed RLM/BFD. In order to properly configure relevant parameters, the network may perform configuration such that the UE reports the relaxation state of RLM/BFD measurement adopted thereby to the network.

The UE may be configured with an SCell via RRC dedicated signaling, and the SCell may be activated and deactivated via a MAC CE transmitted by the network. The UE may be configured with an SCG via RRC dedicated signaling, and the SCG may be activated and deactivated via RRC dedicated signaling. When the SCG is deactivated, the network may further configure whether the UE needs to perform RLM measurement and BFD measurements on the SCG. If the network does not configure the UE to continue the related measurements, then on the deactivated SCG, the UE stops the RLM measurement, and stops the BFD measurement for the PSCell.

In the present invention, in the scenario in which the SCell is deactivated and the SCG is deactivated, ineffective reporting of the relaxation state of RLM/BFD measurement of the UE is avoided, thereby reducing power consumption, and avoiding a possible exception caused by ineffective reporting.

An overview of a method for determining whether to report a measurement relaxation state will be described below with reference to the accompanying drawings.

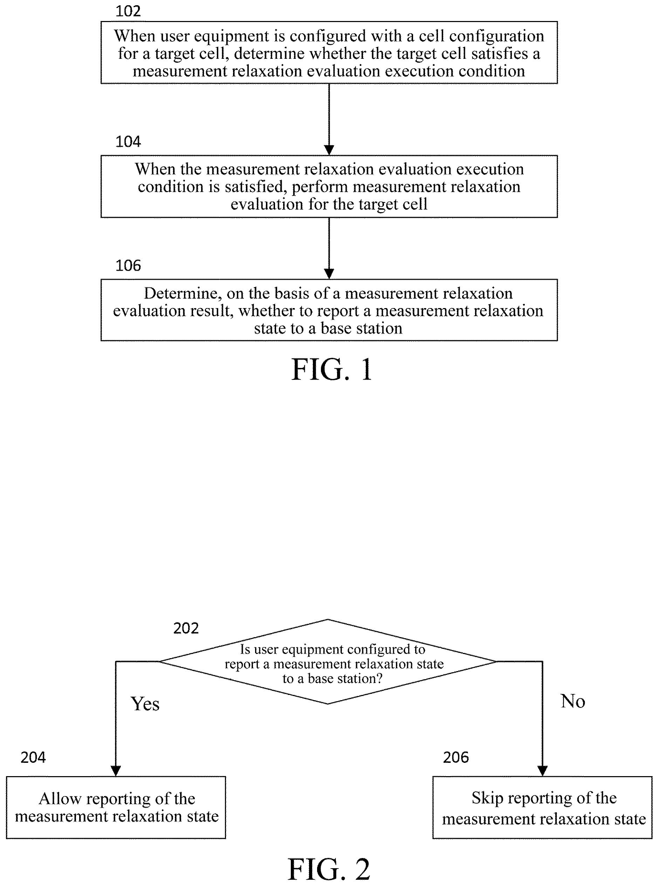

FIG. 1 is a flowchart of a method for determining whether to report a measurement relaxation state provided by an embodiment of the present invention.

As shown in FIG. 1, in 102, when user equipment is configured with a cell configuration for a target cell on which a radio link measurement is to be performed, determining whether the target cell satisfies a measurement relaxation evaluation execution condition. The radio link measurement may be RLM, and in this case, the target cell may be a special cell. The radio link measurement may also be BFD, and in this case, the target cell may be each serving cell (including an SpCell and an SCell) in a corresponding cell group.

The measurement relaxation evaluation execution condition is a condition used to determine whether to perform measurement relaxation evaluation, and may include at least one of the following: the radio link measurement for the target cell is not stopped; the cell configuration includes a configured indication for performing measurement relaxation evaluation on the target cell; and the cell group corresponding to the target cell is activated. A specific example of each condition herein will be described in Embodiment 1 described later.

If it is determined in 102 that the measurement relaxation evaluation execution condition is satisfied, then measurement relaxation evaluation is performed for the target cell in 104. The measurement relaxation evaluation is used to determine whether the target cell satisfies a measurement relaxation criterion related to the radio link measurement. For example, the measurement relaxation evaluation may include a low mobility criterion and a good serving cell quality criterion respectively for RLM and BFD.

After the measurement relaxation evaluation is performed in 104 to acquire a measurement relaxation evaluation result, it is determined in 106, on the basis of the measurement relaxation evaluation result, whether to report a measurement relaxation state to a base station. The measurement relaxation state may be a state in which the measurement relaxation criterion is satisfied or a state in which the measurement relaxation criterion is not satisfied. Alternatively, the measurement relaxation state may be a state in which a relaxed measurement is performed or a state in which a relaxed measurement is not performed.

As an illustration, for example, when it is determined, on the basis of the measurement relaxation evaluation result, that the measurement relaxation state has changed, it is determined that the measurement relaxation state is to be reported to the base station. As another example, alternatively, when it is determined, on the basis of the measurement relaxation evaluation result, that the measurement relaxation state has changed and a preset time has elapsed since the last reporting of the measurement relaxation state, it is determined that the measurement relaxation state is to be reported to the base station.

When it is determined that the measurement relaxation state is to be reported to the base station, the user equipment reports the current measurement relaxation state to the base station.

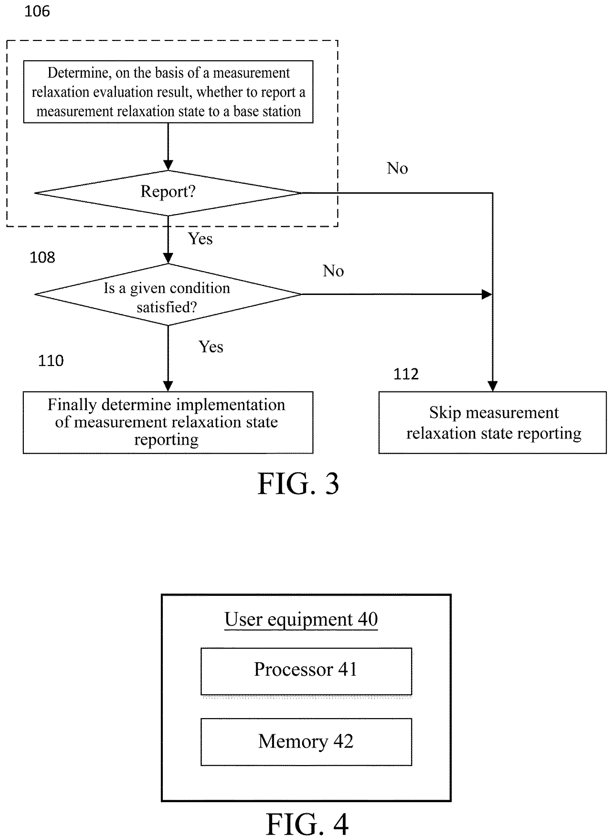

In an example, in addition to determining whether to report the measurement relaxation state on the basis of the measurement relaxation evaluation result, the user equipment may further determine whether to report the measurement relaxation state on the basis of other conditions, and report the measurement relaxation state to the base station when all determination results indicate reporting the measurement relaxation state to the base station. Such an example will be described below with reference to FIG. 2 and FIG. 3, respectively.

FIG. 2 is a flowchart of an exemplary procedure of determining whether to report a measurement relaxation state in a method for determining whether to report a measurement relaxation state provided by an embodiment of the present invention.

As shown in FIG. 2, the user equipment may further determine, in 202, whether the user equipment is configured to report the measurement relaxation state to the base station. The user equipment may consider that the user equipment is configured to report the measurement relaxation state to the base station when at least one of the following conditions is satisfied: receiving report instruction configuration information used to instruct reporting of the measurement relaxation state to the base station; the radio link measurement for the target cell not being stopped; the cell group corresponding to the target cell being a secondary cell group, and the radio link measurement for the target cell not being stopped; and the cell group corresponding to the target cell being activated. Specific examples of these conditions will be described in detail in Embodiment 2 described later.

If the user is configured to report the measurement relaxation state to the base station, then reporting of the measurement relaxation state is allowed in 204, and in this case, if it is also determined, on the basis of other conditions, that the measurement relaxation state is to be reported (e.g., in 106 described above), the user equipment reports the measurement relaxation state to the base station. If the user is not configured to report the measurement relaxation state to the base station, then it is determined in 206 that the measurement relaxation state is not to be reported. In this case, even if it is determined, on the basis of the measurement relaxation evaluation result, that the measurement relaxation state is to be reported to the base station as described in 106 above, for example, the user equipment determines not to perform the reporting. That is, the measurement relaxation state is reported to the base station only when the user equipment is configured to report the measurement relaxation state to the base station.

FIG. 3 is a flowchart of another exemplary procedure of determining whether to report a measurement relaxation state in a method for determining whether to report a measurement relaxation state provided by an embodiment of the present invention.

As shown in FIG. 3, when it is determined, by performing the operation of 106 described above, that the measurement relaxation state is to be reported to the base station, it is further determined whether a given condition is satisfied in 108. The given condition includes at least one of the following: the user equipment has the capability of performing a relaxed measurement corresponding to a radio link measurement; the user equipment is configured to perform measurement relaxation state reporting; the user equipment was configured to perform measurement relaxation state reporting, and has not reported the measurement relaxation state to the base station since the user equipment was configured to perform the measurement relaxation state reporting; the radio link measurement for the target cell is not stopped; and the cell group corresponding to the target cell being activated.

If the given condition is satisfied, then in 110, the user equipment finally determines implementation of measurement relaxation state reporting. It should be noted that although the expression "finally determine" is used here, this expression is only for distinguishing between the determination result before the operation of 108 and the determination result after the operation of 108, or for distinguishing between the determination result when the operation of 108 is performed and the determination result when the operation of 108 is not performed, and does not mean that determination based on other conditions is not performed. In another example, the determination procedure shown in FIG. 2 may also be further performed on the basis of the example of FIG. 3.

If the given condition is not satisfied, then, even if it is determined in 106 that the measurement relaxation state reporting is to be performed, it is determined in 112 that the measurement relaxation state reporting is not to be performed.

The order of the operation 106 and the operation 108 shown in FIG. 3 may also be adjusted and interchanged. In addition, the two determination operations may also be performed in parallel, and when the determination results of both operations indicate that measurement relaxation state reporting is to be performed, then it is determined that measurement relaxation state reporting is to be performed.

As an example, the cell configuration may be carried in an RRC reconfiguration message, and after receiving the RRC reconfiguration message from the corresponding cell group and performing RRC reconfiguration, the user equipment determines whether the target cell satisfies the measurement relaxation evaluation execution condition. Thus, when RRC reconfiguration has been performed and measurement relaxation evaluation no longer needs to be performed, such as when the SCG is deactivated in a received reconfiguration message, unnecessary evaluation procedures can be avoided, thereby preventing unnecessary reporting.

When the RRC reconfiguration message includes a configuration indicating that an SCG deactivation operation is to be performed, it is possible to further perform an operation so that measurement relaxation evaluation will not be performed or will not be determined as an operation of reporting the measurement relaxation state to the base station. As a result, unnecessary evaluation procedures can be avoided, thereby preventing unnecessary reporting. This is described in detail in Embodiment 4 described later.

Further, regarding the start-stop configuration of a radio link measurement and a configuration for indicating whether to report the measurement relaxation state to the base station, only one of them is configured for the user equipment. For example, only one of them may be caused to be present in the RRC reconfiguration message. Alternatively, when the start-stop configuration of the radio link measurement indicates that the radio link measurement is stopped, the configuration indicating whether to report the measurement relaxation state to the base station may not be configured for the user equipment. This will be described in detail in Embodiment 5 described later.

In addition, when a newly added secondary cell or a modified secondary cell is present in the cell group corresponding to the target cell, the method described above may be performed by using the newly added secondary cell or the modified secondary cell as the target cell. That is, a newly added secondary cell or a modified secondary cell is determined, and it is determined whether the secondary cell satisfies the measurement relaxation evaluation execution condition, and if the secondary cell satisfies the measurement relaxation evaluation execution condition, then measurement relaxation evaluation for determining whether a measurement relaxation criterion related to the radio link measurement is satisfied is performed for the secondary cell. Then, it is further determined, on the basis of a measurement relaxation evaluation result, whether to report the measurement relaxation state.

Several specific embodiments of the present invention are described in detail below. In the following specific embodiments, the names of fields in an information element are included, but these names are merely examples, and other names may be used according to requirements in specific practice, and the present invention is not limited thereto.

### Embodiment 1

In this embodiment, a UE receives an RRC reconfiguration (RRCReconfiguration) message.

If the RRCReconfiguration message includes a *masterCellGroup* (master cell group) field or a *secondaryCellGroup* (secondary cell group) field, the UE performs a cell group configuration operation, where both the master cell group and the secondary cell group are configured by a *CellGroupConfig* information element. The *masterCellGroup* field or the *secondaryCellGroup* field is used to indicate whether the configuration is for the master cell group or the secondary cell group.

If *CellGroupConfig* (cell group configuration) includes an *spCellConfig* (special cell configuration) field, the UE performs a configuration operation for a special cell. The UE may perform a low mobility criterion evaluation for this cell group if the UE satisfies at least one of the following conditions:
- an *SpCellConfig* information element includes a *lowMobilityEvaluationConnected* (low mobility evaluation in the connected state) field;
- RLM measurement is not stopped;
- BFD measurements are not stopped;
- RLM measurement is not stopped when the cell group is an SCG;
- BFD measurements are not stopped when the cell group is an SCG; and
- a first measurement relaxation condition.

The UE may perform a good serving cell quality criterion evaluation for RLM of this cell group if the UE satisfies at least one of the following conditions:
- the *SpCellConfig* information element includes a *goodServingCellEvaluationRLM* (good serving cell evaluation for RLM) field;
- RLM measurement is not stopped;
- RLM measurement is not stopped when the cell group is an SCG; and
- a first measurement relaxation condition.

The UE may perform a good serving cell quality criterion evaluation for BFD of this serving cell (i.e., the configured SpCell) if the UE satisfies at least one of the following conditions:
- the *SpCellConfig* information element includes a *goodServingCellEvaluationBFD* (good serving cell evaluation for BFD) field;
- BFD measurements are not stopped;
- BFD measurements are not stopped when the cell group is an SCG;
- BFD measurements are not stopped when the serving cell is a PSCell; and
- a first measurement relaxation condition.

The first measurement relaxation condition includes at least one of the following conditions:
- the cell group is not deactivated, or the cell group is not a deactivated cell group;
- the cell group is activated, or the cell group is an activated cell group;
- when the cell group is an SCG, the SCG is not deactivated, or the SCG is not a deactivated SCG;
- when the cell group is an SCG, the SCG is activated, or the SCG is an activated SCG; and
- a *bfd-and-RLM* (BFD and RLM) field is set to TRUE (i.e., BFD and RLM are not stopped).

The "cell group" described above may refer to a cell group corresponding to the RRCReconfiguration message received by the UE, or a cell group from which the UE receives the RRCReconfiguration message. The "cell group" may also be a cell group that the SpCell corresponds to or is associated with. The "cell group" may also refer to a cell group that the SpCell configured by the *SpCellConfig* information element corresponds to or is associated with.

If *CellGroupConfig* includes an *sCellToAddModList* (SCell addition/modification list) field, the UE performs an SCell addition/modification operation, where SCell addition/modification is configured by an *SCellConfig* information element. For each added SCell or modified SCell, the UE may perform a good serving cell quality criterion evaluation for BFD of this serving cell (i.e., the configured SCell) if the UE satisfies at least one of the following conditions:
- *SCellConfig* includes the *goodServingCellEvaluationBFD* (good serving cell evaluation for BFD) field;
- BFD measurements are not stopped;
- the SCell is not deactivated; and
- the SCell is activated.

Each added SCell refers to each *sCellIndex* value that is not part of the current UE configuration and that is included in *sCellToAddModList.* Each modified SCell refers to each *sCellIndex* value that is part of the current UE configuration and that is included in *sCellToAddModList.*

### Embodiment 2

In this embodiment, a UE receives an RRC reconfiguration (RRCReconfiguration) message, and the RRCReconfiguration message includes an *otherConfig* (other configuration) field.

Optionally, the UE considers itself to be configured to report the relaxation state of RLM measurement, or the UE considers itself to be configured to report the relaxation state of RLM measurement for the cell group, when one or more of the following conditions are satisfied:
- the received *otherConfig* includes an *rlm-RelaxationReportingConfig* (RLM relaxation reporting configuration) field, and *rlm-RelaxationReportingConfig* is set to *setup;*
- RLM measurement is not stopped;
- RLM measurement is not stopped when the cell group is an SCG; and
- a first measurement relaxation condition.

Optionally, the UE considers itself to be not configured to report the relaxation state of RLM measurement, or the UE considers itself to be not configured to report the relaxation state of RLM measurement for the cell group, when one or more of the following conditions are satisfied:
- the received *otherConfig* includes the *rlm-RelaxationReportingConfig* (RLM relaxation reporting configuration) field, and *rlm-RelaxationReportingConfig* is not set to *setup;*
- RLM measurement is stopped;
- RLM measurement is stopped when the cell group is an SCG; and
- a second measurement relaxation condition.

The second measurement relaxation condition includes at least one of the following conditions:
- the cell group is deactivated, or the cell group is a deactivated cell group;
- the cell group is not activated, or the cell group is not an activated cell group;
- when the cell group is an SCG, the SCG is deactivated, or the SCG is a deactivated SCG;
- when the cell group is an SCG, the SCG is not activated, or the SCG is not an activated SCG; and
- the *bfd-and-RLM* (BFD and RLM) field is not set to TRUE (i.e., BFD and RLM are stopped).

Optionally, the UE considers itself to be configured to report the relaxation state of BFD measurement, or the UE considers itself to be configured to report the relaxation state of BFD measurement for the cell group, when one or more of the following conditions are satisfied:
- the received *otherConfig* includes a *bfd-RelaxationReportingConfig* (BFD relaxation reporting configuration) field, and *bfd-RelaxationReportingConfig* is set to *setup;*
- BFD measurements are not stopped;
- BFD measurements are not stopped when the cell group is an SCG;
- when the SpCell is a PSCell, it is determined that BFD measurements are not stopped; and
- a first measurement relaxation condition.

Optionally, the UE considers itself to be not configured to report the relaxation state of BFD measurement, or the UE considers itself to be not configured to report the relaxation state of BFD measurement for the cell group, when one or more of the following conditions are satisfied:
- the received *otherConfig* includes the *bfd-RelaxationReportingConfig* (BFD relaxation reporting configuration) field, and *bfd-RelaxationReportingConfig* is not set to *setup;*
- BFD measurements are stopped;
- BFD measurements are stopped when the cell group is an SCG; and
- a second measurement relaxation condition.

The meaning of the cell group in this embodiment is the same as that in Embodiment 1, and the first measurement relaxation condition is the same as that in Embodiment 1.

### Embodiment 3

In this embodiment, UE initiates a procedure of providing a relaxation state indication of RLM measurement if the UE satisfies at least one of the following conditions:
- the UE has the capability of relaxing RLM measurement;
- the UE has the capability of relaxing RLM measurement for a cell group;
- the UE has the capability of relaxing RLM measurement for a cell group in RRC Connected state;
- the UE is configured to report arelaxation state of RLM measurement (of a cell group);
- a change occurs in the relaxation state of RLM measurement in RRC Connected state;
- RLM measurement for the cell group is not stopped;
- RLM measurement is not stopped when the cell group is an SCG; and
- a first measurement relaxation condition.

The UE initiates a procedure of providing a relaxation state indication of BFD measurement if the UE satisfies at least one of the following conditions:
- the UE has the capability of relaxing BFD measurements;
- the UE has the capability of relaxing a BFD measurement for a serving cell (in a cell group);
- the UE has the capability of relaxing a BFD measurement for a serving cell (in a cell group) in RRC Connected state;
- the UE is configured to report a relaxation state of BFD measurement (of a cell group);
- a change occurs in the relaxation state of BFD measurement in RRC Connected state; and
- a BFD measurement relaxation condition.

The "BFD measurement relaxation condition" includes at least one of the following:
- BFD measurements for the cell group are not stopped;
- BFD measurements are not stopped when the cell group is an SCG;
- BFD measurements of the serving cells are not stopped; and
- the BFD measurements of the SCell are not stopped.

When the UE initiates provision of the relaxation state indication of RLM measurement to the network, if the UE satisfies at least one of the following conditions, then the UE starts a timer T1 and transmits a *UEAssistanceInformation* (UE assistance information) message in which the relaxation state of RLM measurement of the cell group is provided:
- the UE is configured to provide the relaxation state of BFD measurement (for the cell group, or the serving cell, or the SpCell);
- RLM measurement is not stopped;
- RLM measurement is not stopped when the cell group is an SCG;
- the UE has not transmitted *UEAssistanceInformation* including an *rlm-MeasRelaxationState* (relaxation state of RLM measurement) field since the UE was configured to provide the relaxation state of RLM measurement (for the cell group); and
- since the last transmission of *UEAssistanceInformation* including the *rlm-MeasRelaxationState* field of the cell group, the relaxation state of RLM measurement of the cell group has changed, and the timer T1 associated with the cell group is not running.

When the UE initiates provision of the relaxation state indication of BFD measurement to the network, if the UE satisfies at least one of the following conditions, the UE starts a timer T2 and transmits a *UEAssistanceInformation* (UE assistance information) message in which the relaxation state of BFD measurement of the cell group is provided:
- the UE is configured to provide the relaxation state of BFD measurement (for the cell group, or for the serving cell, or for the SpCell);
- BFD measurements are not stopped;
- BFD measurements are not stopped when the cell group is an SCG;
- the UE has not transmitted *UEAssistanceInformation* including a *bfd-MeasRelaxationState* (relaxation state of BFD measurement) field since the UE was configured to provide the relaxation state of BFD measurement (for the cell group, or for the serving cell, or for the SpCell); and
- since the last transmission of *UEAssistanceInformation* including the *bfd-MeasRelaxationState* field of the cell group, the relaxation state of BFD measurement of any serving cell in the cell group has changed, the timer T2 associated with the cell group is not running, and the BFD measurement relaxation condition is satisfied.

The serving cell may refer to a serving cell in which BFD measurement relaxation has changed, or any serving cell, or an SCell. The meaning of the cell group in this embodiment is the same as that in Embodiment 1, and the first measurement relaxation condition is the same as that in Embodiment 1.

### Embodiment 4

In this embodiment, a UE receives an RRC reconfiguration (RRCReconfiguration) message, and if the RRCReconfiguration message includes *scg-State*, an SCG deactivation operation is performed.

When SCG deactivation is performed, if *bfd-and-RLM* is not set to TRUE, at least one of the following operations is performed:
- stopping radio link monitoring on the SCG;
- considering itself as not configured to report the relaxation state of RLM measurement for the SCG;
- stopping reporting the relaxation state of RLM measurement on the SCG;
- stopping the RLM measurement relaxation evaluation on the SCG;
- stopping the procedure of initiating the provision of the relaxation state indication of RLM measurement on the SCG;
- stopping beam failure detection on the PSCell;
- considering itself as not configured to report the relaxation state of BFD measurement for the SCG;
- stopping reporting the relaxation state of BFD measurement on the SCG;
- stopping the BFD measurement relaxation evaluation on the SCG;
- stopping the procedure of initiating the provision of the relaxation state indication of BFD measurement on the SCG;
- considering itself as not configured to report the relaxation state of BFD measurement for the PSCell;
- stopping reporting the relaxation state of BFD measurement on the PSCell;
- stopping the BFD measurement relaxation evaluation on the PSCell; and
- stopping the procedure of initiating the provision of the relaxation state indication of BFD measurement on the PSCell.

### Embodiment 5

In this embodiment, a configuration rule for the *rlm-RelaxationReportingConfig* field and the *bfd-RelaxationReportingConfig* field is implemented.

When *otherConfig* is associated with an SCG, and *bfd-and-RLM* is not set to TRUE, the *rlm-RelaxationReportingConfig* field is absent, otherwise, the *rlm-RelaxationReportingConfig* field is optional.

Alternatively, when *otherConfig* is associated with an SCG, and *bfd-and-RLM* is set to TRUE, the *rlm-RelaxationReportingConfig* field is optional, otherwise, the *rlm-RelaxationReportingConfig* field is absent.

When *otherConfig* is associated with an SCG, and *bfd-and-RLM* is not set to TRUE, the *bfd-RelaxationReportingConfig* field is absent, otherwise, the *bfd-RelaxationReportingConfig* field is optional.

Alternatively, when *otherConfig* is associated with an SCG, and *bfd-and-RLM* is set to TRUE, the *bfd-RelaxationReportingConfig* field is optional, otherwise, the *bfd-RelaxationReportingConfig* field is absent.

FIG. 4 is a simplified structural block diagram of user equipment (UE) according to the present invention. As shown in FIG. 4, the user equipment (UE) 40 includes a processor 41 and a memory 42. The processor 41 may include, for example, a microprocessor, a microcontroller, an embedded processor, and the like. The memory 42 may include, for example, a volatile memory (such as a random access memory (RAM)), a hard disk drive (HDD), a non-volatile memory (such as a flash memory), or other memories, etc. The memory 42 has program instructions stored thereon. The instructions, when run by the processor 41, can implement the above method performed by user equipment described in detail in the present invention.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment for determining whether to report a measurement relaxation state of radio link monitoring measurement, the method comprising:
performing, by the user, radio link monitoring measurement on a cell group, and if the user equipment is configured to report a measurement relaxation state of the radio link monitoring measurement for the cell group and if the radio link monitoring measurement for the cell group is not stopped, initiating reporting of the measurement relaxation state of the radio link monitoring measurement to a base station.

2. The method according to claim 1, wherein initiating reporting of the measurement relaxation state of the radio link monitoring measurement to a base station comprises:
when at least one of the following conditions is satisfied, starting a first timer, and transmitting a first message to the base station, the measurement relaxation state of the radio link monitoring measurement for the cell group being provided in the first message:
the user equipment has not transmitted the first message carrying the measurement relaxation state of the radio link monitoring measurement to the base station since the user equipment was configured to provide the measurement relaxation state of the radio link monitoring measurement for the cell group; and
the measurement relaxation state of the radio link monitoring measurement for the cell group has changed since the last transmission of the first message carrying the measurement relaxation state of the radio link monitoring measurement for the cell group, and the first timer associated with the cell group is not running.

3. A method performed by user equipment for determining whether to report a measurement relaxation state of beam failure detection measurements, the method comprising:
performing, by the user, a beam failure detection measurement on a serving cell in a cell group, and if the user equipment is configured to report a measurement relaxation state of beam failure detection measurements for the cell group and if the beam failure detection measurements for the cell group are not stopped, initiating reporting of the measurement relaxation state of the beam failure detection measurements to a base station.

4. The method according to claim 3, wherein initiating reporting of the measurement relaxation state of the beam failure detection measurements to a base station comprises:
when at least one of the following conditions is satisfied, starting a second timer, and transmitting a first message to the base station, the measurement relaxation state of the beam failure detection measurements for the cell group being provided in the first message:
the user equipment has not transmitted the first message carrying the measurement relaxation state of the beam failure detection measurements to the base station since the user equipment was configured to provide the measurement relaxation state of the beam failure detection measurements for the cell group; and
the measurement relaxation state of the beam failure detection measurements for any serving cell in the cell group has changed since the last transmission of the first message carrying the measurement relaxation state of the beam failure detection measurements for the cell group, and a first timer associated with the cell group is not running.

5. The method according to any one of claims 1 to 4, further comprising:
determining whether the user equipment is configured to report the measurement relaxation state to the base station; and
reporting the measurement relaxation state to the base station only when the user equipment is configured to report the measurement relaxation state to the base station,
when at least one of the following conditions is satisfied, determining that the user equipment is configured to report the measurement relaxation state to the base station:
receiving report instruction configuration information used to instruct reporting of the measurement relaxation state to the base station;
the radio link monitoring measurement for the cell group not being stopped; and
the beam failure detection measurements for the cell group not being stopped.

6. The method according to any one of claims 1 to 4, wherein a configuration of the cell group is carried in an RRC reconfiguration message, and the user equipment determines a configuration condition of the cell group after receiving the RRC reconfiguration message from the corresponding cell group and performing RRC reconfiguration.

7. User equipment, comprising:
a processor; and
a memory, having instructions stored therein,
wherein the instructions, when run by the processor, perform the method according to any one of claims 1 to 6.
